# EUROPÄISCHE PATENTANMELDUNG

(11) **EP 1 005 935 A2**
(43) Veröffentlichungstag der Anmeldung: **07.06.2000**
(21) Anmeldenummer: 99123246.3
(22) Anmeldetag: 29.11.1999
(51) Int. Cl.: B23B 27/14

(54) **Schneideinsatz**

(30) Priorität: 30.11.1998 DE 19855103
(71) Anmelder: Leeb, Felix, D-94405 Landau/Isar (DE)
(72) Erfinder: Leeb, Felix, D-94405 Landau/Isar (DE)
(74) Vertreter: Schön, Theodor, Patent- und Zivilingenieur

(57) **Zusammenfassung**

Bei Schneidwerkzeugen zum Zirkularbohr-, Plan-, Kopier- und Tauchfräsen als auch zum Drehen, bei welchen der Übergang von der Stirnschneide zur äußeren oder auch inneren Flankenschneide durch einen Radius gebildet ist und dieser mit einer Schutzfase (2) oder auch noch mit einer Spanformleitstufe (3) ausgestattet ist, ist die Breite der Schutzfase (2), um einen durchgehenden weichen Spanabtrag zu gewährleisten, dem der sich daraus ergebenden stark unterschiedliche Spanabtragsstärke angepaßt. Desweiteren ist auch die Spanformleitstufe (3) dieser unterschiedlichen Spanabtragsstärke angepaßt. Dabei verändern sich diese Werte jeweils bezogen auf deren Breite, ausgehend von der Stirnschneide (4) zur Umfangsschneide in einem Verhältnis von ca. 1:4, wobei die Veränderung in der ersten Radiushälfte am größten ist.

## Beschreibung

Spanabhebende Schneidenwerkzeuge zum Fräsen und Drehen, welche in ihrem Übergang von der Strinschneide zur Flankenschneide durch einen Radius gebildet sind, sind schon seit langem bekannt. Diese Plattenformen sind seit neuerer Zeit teilsweise schon mit einer Spanformleitstufe in ihren Schneidenbereich belegt. Um bei runden Schneidenübergängen eine möglichst hohe Standzeit erreichen zu können, sind diese in ihrem Schneidenbereich mit einer Schutzfase in meist negativem Schneideingriffswinkel ausgestattet. Dabei hängt beim Einsatz von Schneidplatten dieser negative Schneideingriffswinkel auch von der Lage der Platte im Schneidträger ab. Dabei verläuft derzeit diese Schutzfase mit runden Übergängen von der Stimschneide zur äusseren bzw. inneren Flankenschneide immer in gleichbleibender Stärke. Ferner ist diese Schutzfase in etwa der zu beabsichtigten Abtragsstärke der jeweiligen Späne angepaßt Beispiel: ein Vorschub pro Zahn (gleich Spanstärke) von 0,40 mm erfordert eine Schutzfase von ca. 0,10 mm. Dabei hängt die Größe der Schutzfase sowie deren Eingriffswinkel auch sehr stark von den zu zerspanenden Material ab. Diese in ihrer Breite gleichbleibenden Schutzfase ist mit einem wesentlichen Nachteil behaftet. Wie das Schaubild in der Figur 6 zeigt, weist der abgetragene Span, bedingt durch die Radiusform der zum Einsatz kommenden Schneide in deren Schneideingriffbereich, einen sehr großen Unterschied in seiner Spanstärke auf. Durch diese dem der jeweiligen sehr unterschiedlichen Spanstärke nicht angepaßte Schutzfase ensteht ein teilweise sehr großer unnötiger Schneidenwiderstand, wobei der Schneidenwiderstand bei einer stark negativ verlaufenden Schutzfase am größten ist. zum andern erbringt auch eine immer gleich große umlaufende bzw. in der Radiusform mitlaufende Spanformleitstufe nicht immer ideale Spanformgebung. Somit ist dann deren schneller Spanabgang von der Schneidenfläche nicht ideal gelöst.

### Lösungsvorschlag

Diese Aufgabe wird erfindungsgemäß mit den kennzeichnenden Merkmalen des Patentanspruches 1 gelöst. In erfindungsmäßiger Weise wird vorgeschlagen, ausgehend von Schneidwerkzeugen mit runden Übergängen im Stirnschneidenbereich die Stärke der Schutzfase in etwa der sich fortlaufendend stark veränderten abzutragenden Spanstärke anzupassen. Desweiteren ist auch die Spanformleitstufe, soweit vorhanden, dieser sehr unterschiedlich starken Spanabtragungsstärke anzupassen. Dabei ist auch die beim Tauchfräsen bzw. Zirkularbohrfräsen axiale Zustellung pro Schneide je Umdrehung von ca. 0,02 - 0,04 mm je nach Plattengröße zu berücksichtigen. Beim Tauchdrehen ist dieser Wert entsprechend etwas größer zu berücksichtigen. Dabei ist dann bei Rundplatten eine entsprechende Lagefixierung (z.B. Verdrehbereich 90° oder 120° oder auch 180°) im Wendeplattenhaltersitz erforderlich (Fixierung bereits Stand der Technik).

### Beschreibung

Schneidwerkzeuge mit radiusförmigen Übergängen im Bereich der Stirnschneide, wobei dieser Bereich mit einer Schutzfase belegt ist. Die Beschreibung erfolgt hier als Beispielbeschreibung von Rundplatten.

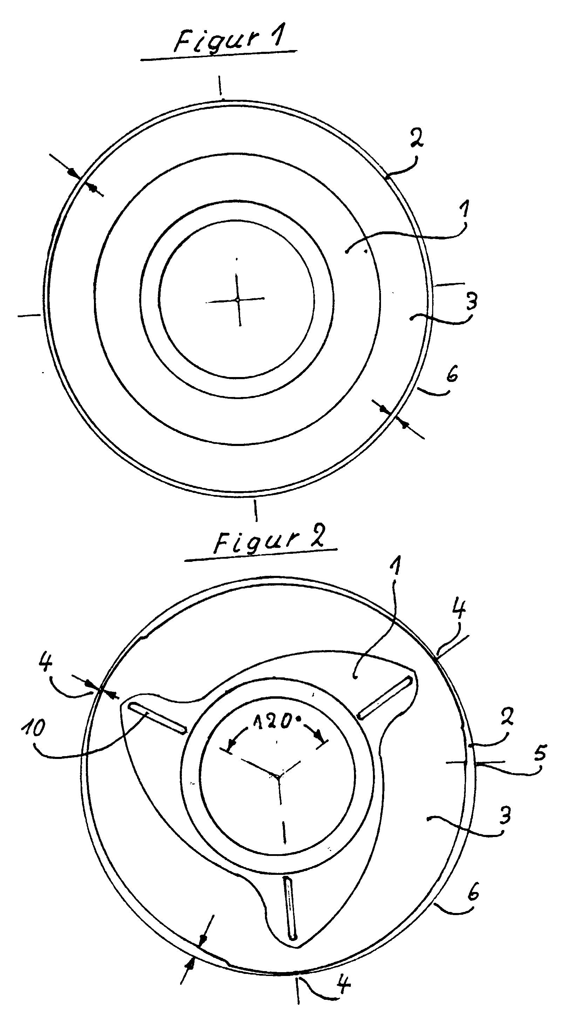

- Fig. 1 zeigt: eine Rundplatte mit umlaufender gleichbleibender Schutzfase und Spanformleitstufe
- Fig. 2 zeigt: eine Rundplatte, wobei die Schutzfase und die Spanformleitstufe der jeweiligen stark veränderten abzutragenden Spanstärke angepaßt ist
- Fig. 3 zeigt: eine Rundplatte zum Drehen oder auch zum Zirkularbohrfräsen unter großen Eintauchwinkel
- Fig. 4 zeigt: diese Rundplatte im Schnitt A-A
- Fig. 5 zeigt: diese Rundplatte im Schnitt B-B
- Fig. 6 zeigt: einen Frässpan, welcher mit einem Zahnvorschub von 0,6 mm erzeugt wurde
- Fig. 7 zeigt: einen Frässpan, welcher mit einem Zahnvorschub von 0,4 mm erzeugt wurde

Die in Figur gezeigte Rundplatte (1) zeigt den derzeitigen Stand der Technik auf.

Dabei verläuft eine Schutzfase (2) als auch eine Spanformleitstufe (3) in immer gleichbleibender Stärke im Anschlußbereich der Umfangsschneide (6).

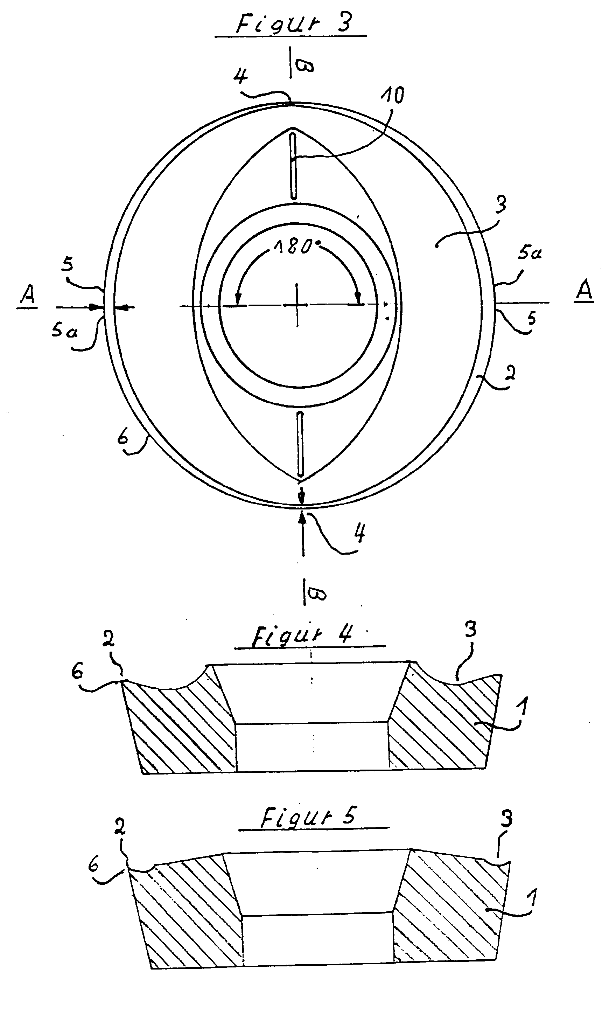

Bei der in Fig. 2 gezeigten Rundplatte (1) ist diese in drei gleiche Schneidenabschnitte im Versatz von jeweils 120° aufgeteilt. Dabei verläuft die, sich an die Umfangsschneide (6) anschließende Schutzfase (2), in etwa einer Stärke, welche der abzutragenden jeweiligen stark veränderten Spanstärke angepaßt ist, wobei dann die in der Breite fortlaufend veränderte Schutzfase im üblichen Verhältnis von ca. 1:4 zu der abzutragenden Spanstärke ausgebildet ist.

Dabei verändert sich diese Stärke ausgehend von der Stirnschneide (4) zur Umfangsschneide (5) in einem Verhältnis von ca. 1:4 bzw. tritt die stärkste Veränderung im Bereich der ersten Radiushälfte ein. Die Größe der sich an diese Schutzfase anschließenden Spanformleitstufe (3) verläuft in etwa im gleichen Verhältnis (Verhältnis Schutzfase) bzw. etwas abgeschwächt. Um diese Platte, welche in dieser Ausführung 2 mal gedreht werden kann, auch jeweils positionsgenau am Plattenträger festlegen zu können, weist diese in ihrem Anlagebereich zum Halter eine Dreipunktanlage auf (hier nicht gezeigt, bereits Stand der Technik).

Um diese Platte an einem bereits vorhandenem Plattenhalter in etwa positionsgenau anbringen zu können, kann auch eine Markierungslinie (10) diesen Zweck erfüllen.

Diese hier gezeigte Rundplatte kann in dieser Ausführung zum Plan-, Tauch- Zirkularbohr- und Kopierfräsen als auch zum Drehen eingesetzt werden.

Figur 3 zeigt eine Rundplatte (1) mit selbigen Veränderungen im Bereich der Stirnschneide (4) zur Umfangsschneide (5+5a) in Bezug Schutzfase (2) und Spanformleitstufe (3). Diese Rundplattenausführung ist hauptsächlich für den Einsatz auf Drehmaschinen bestimmt, wenn diese allseitig (gleich im Vor- und Rücklauf sowie zum Eintauchen) in Spanabtrag zum Einsatz kommen soll bzw. ist diese auch zum Tauchfräsen unter einem starken Eintauchwinkel geeignet.

Figur 4 zeigt diese Platte im Schnitt A-A.

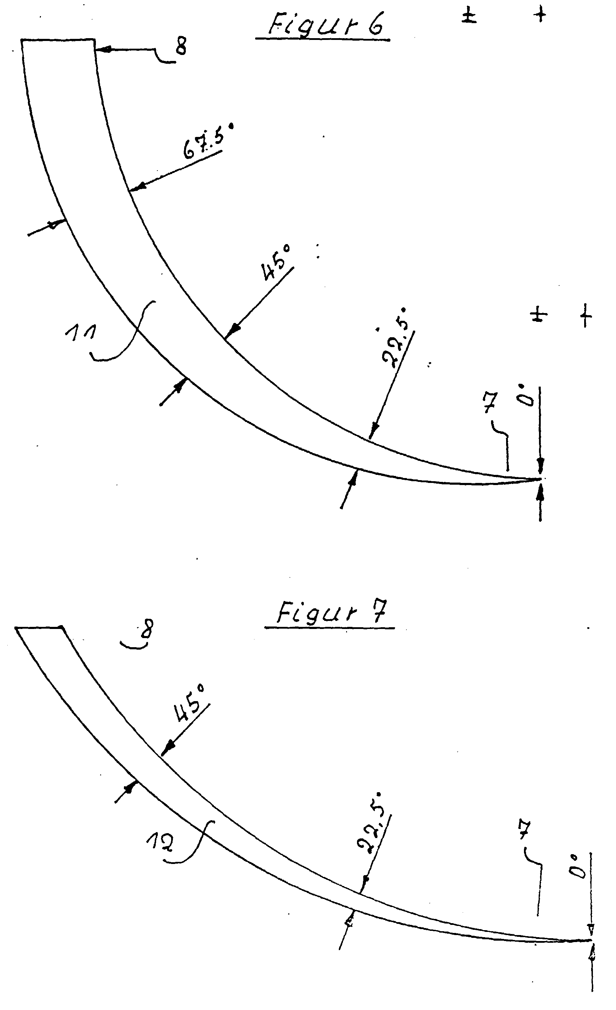

Figur 5 zeigt diese Platte im Schnittverlauf B-B.

Figur 6 zeigt einen Frässpan (11) im Maßstab 30:1, welcher mit einer Wendeplatte erzeugt wurde, wobei diese in ihrem Übergang von der Stirnschneide zur äußeren Flankenschneide einen Radius von 3,7 mm aufwies, wobei die Einsatztiefe 3,5 mm und der Vorschub pro Zahn 0,6 mm betrug. Desweiteren ist eine zusätzliche Spanstärke von 0,03 mm in der Eintauchtiefe beinhaltet.

Figur 7 zeigt einen Frässpan (12) im Maßstab 30:1, welcher mit einer Rundplatte mit einem 5 Radius mit einem Vorschub pro Zahn von 0,4 mm sowie einer Spantiefe von 2,5 mm erzeugt wurde. Dabei ist auch hier eine zusätzliche Spanstärke von 0,03 mm in der Eintauchtiefe beinhaltet.

Hierbei ist jeweils ein deutlicher Anstieg der Spanstärke ausgehend vom Spananfang (7) zu dessen Ende (8) ersichtlich. Dabei ist der Anstieg der Spanstärke in der ersten Hälfte des Radiusbereiches (gleich bis 45°) am größten. Desweiteren ist im Bereich der Stirnschneide (4) von einer Mindestschutzfase von ca. 0,01-0,03 mm auszugehen, wobei dieses Maß sehr stark von der Festigkeit des zu zerspannenden Materials abhängt.

Zum andern kommen Rundplatten beim Ebenenfräsen meist nur zu ¹/₅ - ¼ ihres jeweiligen Plattendurchmesssers in Schneideingriff, z.B. Plattendurchmesser 10 ergibt eine Fräseinsatztiefe von 2-2,5 mm pro Fräsbahn.

Zu erwähnen wäre noch daß bei allen Zeichnungen das Verhältnis Größe der Schutzfase zur Plattengröße und deren Randabstand zum Plattendurchmesser überproportional groß ausgelegt ist, um diese unterschiedlich große Schutzfase zeichnerisch überhaupt darstellen zu können.

## Patentansprüche

1. Schneidwerkzeuge mit radiusförmigen Übergängen im Bereich der Stirnschneide, wobei dieser Bereich mit einer Schutzfase oder auch noch mit einer Spanformleitstufe belegt ist zum Einsatz als Zirkularbohrfräser, zum Tauch- und Planfräsen als auch Kopierfräsen, wobei dann das Fräswerkzeug drehangetrieben auf entsprechenden CNC-gesteuerten Maschinen eingesetzt ist und auf einer Bahn oder Kreisbahn mit fortlaufender Z-Achszustellung bzw. bei Ausnehmungen großer Taschen und bei Kopierfräsarbeiten auch teilweise ohne Z-Achszustellung bewegt wird sowie Drehwerkzeuge, welche denn stehend in Drehmaschinen eingesetzt sind, wobei dann bei Einsatz von Rundplatten diese Schneidwerkzeuge im Plattensitz jeweils entsprechend in ihrer Einsatzrichtung fixiert angebracht sind, sind dadurch gekennzeichnet, daß die Breite der Schutzfase ( 2 ) am Schneidwerkzeug (z.B. Rundplatte) (1) im Bereich des Übergangs von der Stirnschneide ( 4 ) zum äußeren oder auch inneren Flankenschneidenbereich ( 5+5a ) verlaufend in etwa der sich sehr stark veränderten jeweiligen Spanabtragungsstärke (7-8) angepaßt ausgeführt ist, wobei auch die Breite der Spanformleitstufe (3), soweit vorhanden, in etwa in diesem gleichen Verhältnis ausgelegt ist.
